(19) Europäisches Patentamt
European Patent Office
Office européen des brevets

(11) **EP 1 818 739 A2**

(12) **EUROPEAN PATENT APPLICATION**

(43) Date of publication:
**15.08.2007 Bulletin 2007/33**

(51) Int Cl.:
*G04G 5/00* (2006.01)     *G04G 9/00* (2006.01)
*H04M 1/725* (2006.01)

(21) Application number: **07102152.1**

(22) Date of filing: **12.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.02.2006   KR 20060013045**

(71) Applicant: **Samsung Electronics Co., Ltd.**
**Suwon-si, Gyeonggi-Do (KR)**

(72) Inventors:
 • **JEONG, Yang-Seok**
 **Gyeonggi-do (KR)**

 • **LEE, Ki-Tae**
 **Gyeonggi-do (KR)**
 • **KIM, Ok-Hyeon**
 **Gyeonggi-do (KR)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

(54) **Device and method for managing time information**

(57)     Disclosed is a device and method for managing time information in a mobile communication terminal. To this end, the present invention provides a plan in which time information of a terminal can be automatically set with the local time of a corresponding time zone as a reference in accordance with a user's selection in a communication network, and a schedule can be exchanged with the universal time as a reference when it is necessary to share the schedule containing time information between terminals in different time zones.

GNT+0

GNT+4

FIRST TIME ZONE

SECOND TIME ZONE

100

100

MOBILE TERMINAL

SET ALARM TO 6 o'CLOCK A.M.
(UNIVERSAL TIME 0 o'CLOCK)

SET ALARM TO 6 o'CLOCK A.M.
(UNIVERSAL TIME 4 o'CLOCK)

OUTPUT ALARM AT 6 o'CLOCK A.M.

OUTPUT ALARM AT 6 o'CLOCK A.M.WITH LOCAL TIME OF
SECOND TIME ZONE AS REFERENCE,
(OUTPUT ALARM AT 10 o'CLOCK A.M. WITH LOCAL TIME OF
FIRST TIME ZONE AS REFERENCE)

FIG.1

EP 1 818 739 A2

**Description**

The present invention relates to a device and method for managing time information in a mobile communication terminal, and more particularly to a device and method for managing local time with Universal Time (UT) as a reference in a mobile communication terminal.

A mobile terminal has a clock function capable of displaying the local time of a region where a user is located. In the mobile terminal, generally local time refers to the time zone in which an enterpriser marketing the terminals resides. In a mobile communication system, local time is that of a Home Public Land Mobile Network (hereinafter, referred to as PLMN) to which a user subscribes. For example, alarms, schedule management and the like and a variety of additional functions use local time as a reference. Here, PLMN refers to a chargeable public communication network available for telephone services of mobile communication providers, which includes mobile terminals, stations, subscriber locations, registration devices and switches for mobile communications. The home PLMN is the PLMN used while selecting a PLMN when service is intended to be received from a corresponding service provider. A characteristic of a current HPLMN is that, when selecting a PLMN in an automatic or manual mode, it is searched with priority while being stored in a Subscriber Identity Module (hereinafter, referred to as SIM).

However, a mobile communication terminal user moves between regions, countries or networks, and may receive roaming services. Considering that there may exist a time difference even in the same country, in the case where the user moves between regions or countries such that local time is changed, the user should manually change the local time.

As described above, system time adjustment is accomplished manually by a user in the mobile communication terminal. Thus, a mobile communication terminal user moving frequently between different time zones has to set the time of a terminal system to the corresponding local time in order to properly use an application program related to the time of a terminal, e.g., alarm, schedule management or the like.

Network Identity and Time Zone (NITZ) is a suggested function to reduce such an inconvenience in that a user has to individually set the system time manually to a local time when roaming in a different time zone and to raise the roaming performance of a GSM network. In a mobile communication network to which such a NITZ function is applied, a serving Public Land Mobile Network (PLMN) sends Identity (ID) information of the current PLMN, time information, information on Daylight Saving Time (DST), Local Time Zone (LTZ) and the like to a terminal. That is, if the user uses a NITZ service in the case where the user moves to a region in which the time zone has changed, the user can change the system time of a mobile communication terminal into the time of the corresponding region. In such a NITZ function, the serving PLMN sends information on a network name and time to a terminal, and the NITZ function is performed when the terminal is registered to a network, when the terminal moves to a different local time zone, when the network changes its own local time zone, such as in summer, when DST is applied, and winter, when the DST is not applied, or when the terminal so requires. At this time, information on year/month/day/hour/minute/second of Universal Time (UT), Local Time Zone (LTZ) indicating how much a corresponding time zone is relatively offset by the UT, and DST is contained in the time information sent from the PLMN. The local time is adjusted by means of the sum of the LTZ and the UT, and the LTZ is corrected by DST to evaluate the local time of a region where summertime is used.

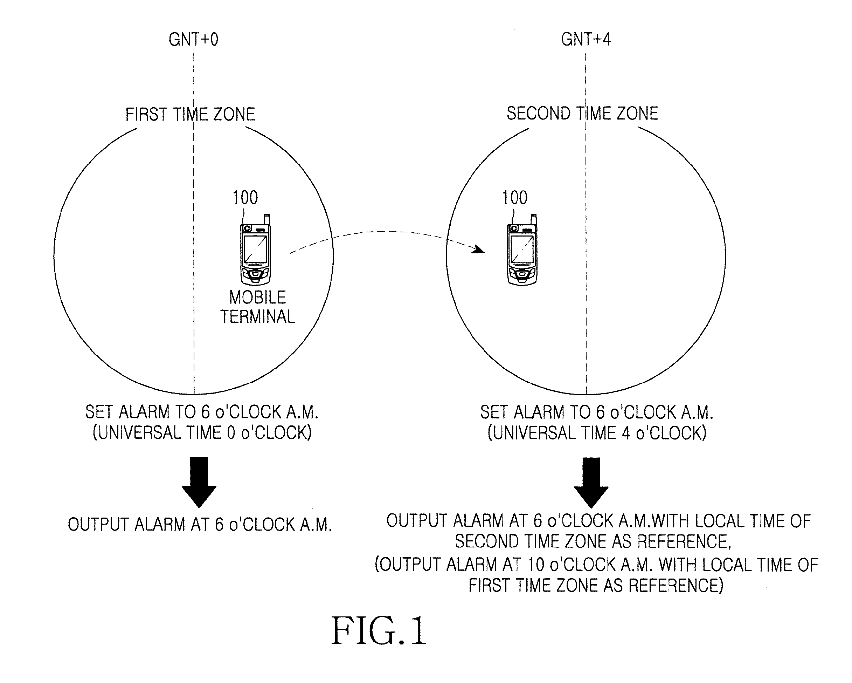

Further, the application program related to time of a terminal operates with the local time of a corresponding time zone as a reference. Thus, in the case where a terminal moves to regions in different time zones, application programs related to time such as alarms, morning calls, schedule management and the like, which are set to be suitable for the local time before movement, now operate with the system time of a second time zone where the terminal is presently located as shown in FIG. 1. If alarm/morning call/schedule management is required with the schedule or time of the first time zone before moving to the second time zone where the terminal is now located, a user has to change the current system time into the local time of the time zone before the movement, or calculate the current system time directly as the local time of the time zone before the movement and then set it again.

For example, it is assumed that a user of a mobile terminal 100 sets an alarm to 6:00 a.m. in the first time zone where the UT is 0:00, and moves to the second time zone, and the mobile terminal 100 performs automatic time change setting using the NITZ function as shown in FIG. 1. Then, the mobile terminal 100 in the second time zone automatically changes the system time to the local time of the second time zone and outputs the alarm having been set as 6:00 a.m. when the local time of the second time zone becomes 6:00a.m. That is, the alarm is output at 10:00 a.m. with the local time of the first time zone as a reference. Thus, in the case where the user intends to output the set alarm with the local time of the first time zone as a reference, the user should individually calculate the currently set alarm time relative to the local time of the first time zone to change the time setting.

Further, in the case where users intend to share a schedule when located in different time zones and terminal system time is used as a local time; the users intend to set the shared schedule as the corresponding schedules with the local times of their own time zones as references, this situation may easily lead to confusion.

With reference to FIG. 1 an example where the users should set a shared schedule with each other is discussed: a conference call is made between user A of a mobile terminal in the first time zone that is GMT+0 indicating a GTM referential time difference, i.e., time information denoting local information, and user B of a mobile terminal in the second time zone that is GMT+4. If user A sends a message that user A intends to schedule a conference call at 9:00 with user B, since the message has been sent from the terminal of the time zone different from that of user B, user B should individually calculate that 9:00 in the first time zone is 13:00 o'clock in the second time zone where user B is located.

As described above, the system time adjustment of a mobile communication terminal may be generally set manually to the local time of a corresponding time zone by a user or automatically in a mobile communication network using the NITZ function. In the case where the system time is set by a user having an exact local time reference, relatively exact system time can be set, while there is an inconvenience in that the user should change the setting whenever the time zone is changed. Further, in the case where the NITZ function is used, time can be automatically set, while accuracy is degraded because it is measured by the minute. Furthermore, the system time of a current terminal can be automatically synchronized with the local time of a correspondent time zone through the NITZ function. However, the NITZ function only sends to a terminal the serving PLMN ID information and information related to time, it does not however, provide how to apply this information in the terminal.

Accordingly, the present invention has been made to solve the above-mentioned problems occurring in the prior art. It is the object of the present invention to provide a device and a method for automatically setting the corresponding local time in accordance with user's selection in a mobile communication network.

This object is solved by the subject matter of the independent claims.

Preferred embodiments are defined in the dependent claims.

It is an aspect of the present invention to provide a device and a method for exchanging a schedule with UT as a reference when the schedule to be shared contains time information between terminals in different time zones.

In order to accomplish the object and aspects of the present invention, there is provided a device for managing time information in a terminal, which includes an RF unit for receiving time information from Public Land Mobile Network (PLMN); a time information change unit for calculating the system time of the terminal using Universal Time (UT) as a reference and to reflect it to an application; and a controller for changing the system time calculated through the time information change unit with the local time of the selected time zone as a reference in accordance with the setting for changing a current system time with the local time of a specific time zone as a reference using the received time information so as to reflect it to an application.

In order to accomplish the object and the aspects of the present invention, there is provided a method for managing time information in a terminal, which includes receiving time information from PLMN; examining if the setting for changing the time information into a current system time with the local time of a specific time zone as a reference is accomplished; and calculating a system time with UT of a selected time zone as a reference to change time within an application.

According to yet another aspect of the present invention, there is provided a method for managing time information for schedule sharing between sending and receiving terminals, which includes containing UT information to send it in a case where the sending side terminal sends the message in which time information is contained to the receiving side terminal; examining if the time information contained in the message is automatically changed and set with the local time of the sending side time zone as a reference if the message is received by the receiving side terminal; calculating the time contained in the message with the local time of the sending side time zone as a reference if the time information is automatically changed and set with the local time of the sending side time zone as a reference; and containing the calculated time in the message to display it.

The present invention will be more apparent from the following detailed description taken in conjunction with the accompanying drawings, in which:

FIG. 1 shows an example of managing time with changed system time as a reference in a case where the time zone is changed in a mobile communication terminal;
FIG. 2 is a block diagram showing the typical internal configuration of a mobile communication terminal to which the invention applies;
FIG. 3 is a flowchart illustrating the process of automatically correcting time information using a NITZ function in the case where a time zone is changed in a mobile communication terminal according to the present invention;
FIG. 4 shows an example of automatically correcting time information in the case where the time zone is changed in the mobile communication terminal according to the present invention;
FIG. 5 is a flowchart illustrating the process of managing time information with universal time (UT) as a reference between mobile communication terminals located in different time zones according to the present invention; and
FIG. 6 shows an example of automatically correcting time when sending/receiving a message containing time information between the mobile communication terminals located in different time zones according to the present invention.

Hereinafter, preferred embodiments of the present invention will be described with reference to the accompanying drawings. In the following description, the same elements will be designated by the same reference numerals although they are shown in different drawings. Further, in the following description of the present invention, a detailed description of known functions and configurations incorporated herein are omitted thus avoiding obscuring the subject matter of the present invention.

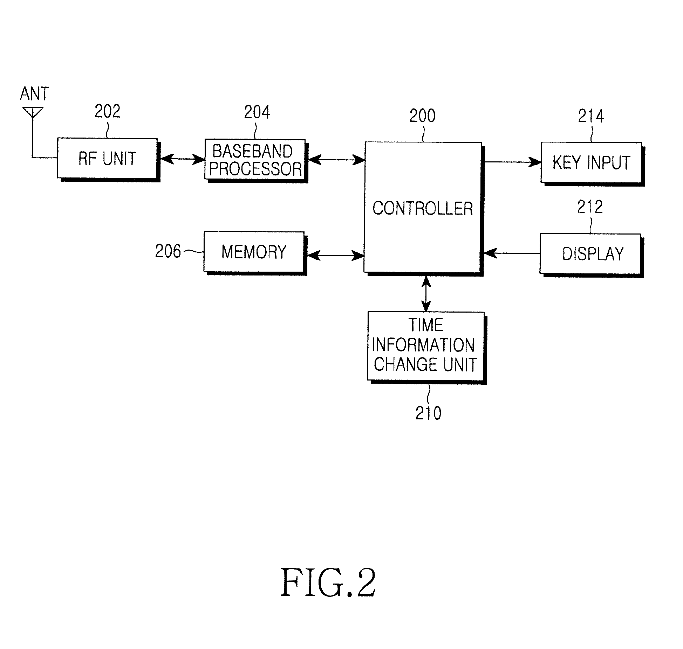

Referring to FIG. 2, the Global System for Mobile Communication (GSM) terminal, according to the present invention, includes an RF unit 202, a baseband processor 204, a memory 206, a time information change unit 210, a key input 212, a display 214 and a controller 200.

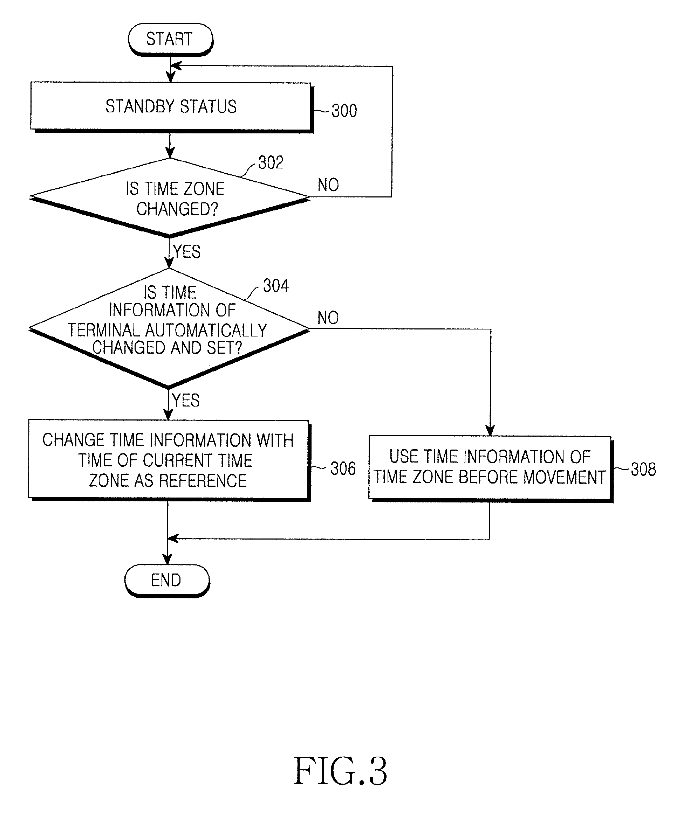

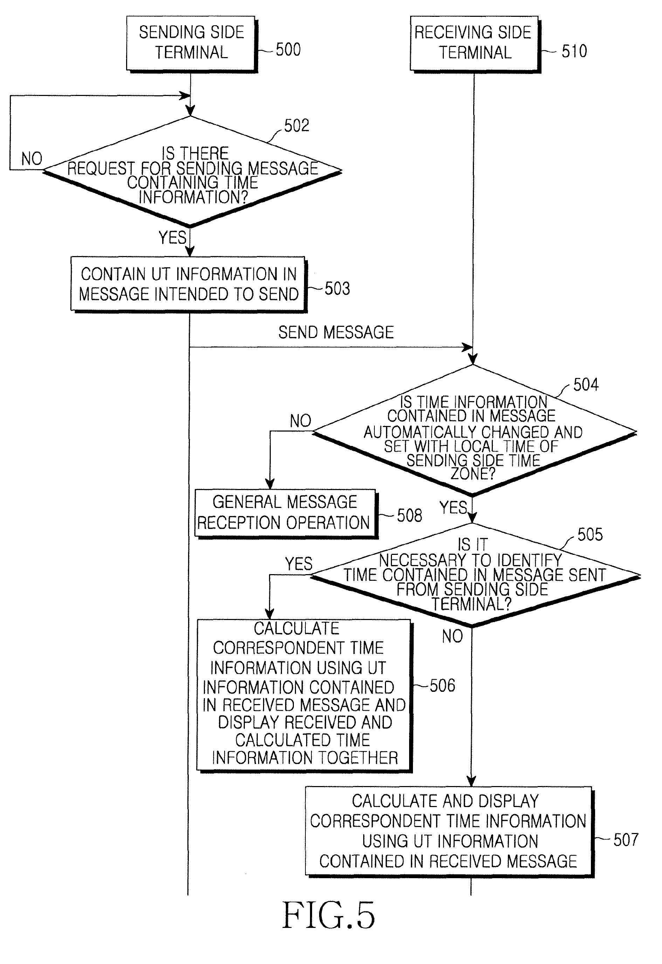

The controller 200 automatically changes and sets time information in accordance with the user's selection for setting current system time with the local time of the previous time zone as a reference or with the local time of the current time zone as a reference in schedule management. Further, the controller 200 sends a message containing UT information. Furthermore, in the case where the message containing the UT information is received, the controller 200 changes time information with the current local time as a reference using the UT information within the message received in accordance with a presence of the automatic change setting of the time information contained in the message with the local time of the current time zone as a reference. A detailed operation of the controller 200 is now discussed with reference to FIGS. 3 to 5. Further, the controller 200 may be a controller of a sending side terminal 500 or a receiving side terminal 510 as shown in FIG. 5.

Furthermore, in the case where information for changing the system time, i.e., information on UT and information on the time difference between UT and the local time of a current time zone are received from a PLMN to which a NITZ function is applied, the controller 200 stores the data in memory 206. The time information received from the PLMN are LTZ and DST information. Further, it will be apparent that the time information change unit 210 connected to the controller 200 may be implemented using UT such as Greenwich Mean Time (GMT). That is, in the case where the time information change unit 210 can calculate UT using the received time information, it calculates the system time of the terminal with the UT of the selected time zone as a reference under the control of the controller 200 so as to change time information in applications such as alarm and schedule management, which rely on the time information for their proper function.

The RF unit 202 transmits/receives an RF signal to/from a station. Further, the RF unit 202 converts a received signal into an Intermediate Frequency (IF) signal to output it to the baseband processor 204 connected to the aforementioned controller 200. The RF unit also converts the IF signal input from the baseband processor 204 into an RF signal suitable to be transmitted. Furthermore, the aforementioned baseband processor 204 is a Baseband Analog ASIC (BBA) providing an interface between the controller 200 and the RF unit 202. The baseband processor 204 converts a digital baseband signal from the controller 200 into the analog IF signal input to the RF unit 202. The baseband processor 204 also converts an analog IF signal from the RF unit 202 into a digital baseband signal to input the signal to the controller 200.

The architecture of memory 206 may consist of Read Only Memory (ROM), flash memory, Random Access Memory (RAM) and the like. The ROM is used to store programs for the process and control of the controller 200 and various kinds of referential data. The RAM provides a working memory for the controller 200, and the flash memory provides an area for storing various kinds of renewable data for storage.

Next, the key input 212 may include various kinds of keys containing numeral keys and provides key input from the user to the controller 200.

The display 214 outputs various kinds of display data generated from the terminal and is preferably configured as a Liquid Crystal Display (LCD) or the like. If the LCD is implemented as a touch screen, the display 214 may be operated as a key input.

In the present invention, the system time of the terminal may be set to the local time of a time zone where the terminal is currently located or to the UT that is not influenced by the time zone as the reference time of an application program . In addition, the system time of the terminal may be set using the local time of a corresponding time zone input directly by a user or automatically using the NITZ function.

Further, in a first embodiment of the present invention a plan is provided in which time information is automatically changed and set in accordance with user's selection for whether the current system time is set with the local time of the previous time zone as a reference or with the local time of the current time zone as a reference in schedule management within the terminal.

Furthermore in a second embodiment of the present invention, time information for schedule sharing between users located in different time zones uses UT as a reference.

According to the first embodiment of the present invention, a process of automatically correcting time information using the NITZ function in the case where a time zone within the GSM terminal is changed is discussed with reference to FIG. 3.

First, the controller 200 goes into standby status at step 300 and examines whether or not a time zone is changed in accordance with time information received from the PLMN at step 302. If the time zone is changed, the controller 200 proceeds to step 304 and examines if the system time of the terminal is automatically changed and set using the NITZ function If yes, the controller 200 proceeds to step 306 so as to change and set time information within an application of the terminal with the local time information of a current time zone as a reference. Further, if the time information of the terminal is not set with the local time of the current time zone but with that of the time zone before the movement as a reference at step 304, the controller 200 proceeds to step 308 leaving the time information of the time zone before the movement as it is.

The processes of automatically changing the time information of the terminal with the local time of the current time zone as a reference at step 306 and leaving the time information of the time zone before the movement as it is at step 308 are discussed in a more detailed manner.

First, a case where the system time of the terminal is set to the local time is discussed. The system time of the terminal may be set directly by a user or automatically using the NITZ function. In the case where the system time of the terminal is automatically set using the NITZ function, it is set according to Equation 1 as follows.

$$Time\_system = Time\_local\_current - (UT\_current + LTZ\_current + DST\_current) \quad \dots \dots (1)$$

In Equation 1, 'Time_system' denotes the system time of the terminal, 'Time_local_current' denotes the local time of the current local time zone, 'UT_current', 'LTZ_current' and 'DST_current' denote UT, LTZ and DST, which are time information values received from a current PLMN, respectively.

In the case where the system time is used by a user with the local time of the currently located time zone as a reference, it is set to a system time calculated according to Equation 1.

Second, a case where the system time is set to UT that is not influenced by the time zone is discussed. In a case where the local time of the current time zone is input by a user, the system time may be calculated according to Equation2 as follows.

$$Time\_system = Time\_local\_current - (LTZ\_current + DST\_current) \quad \dots \dots (2)$$

Further, in a case where the system time is automatically set using the NITZ function, it may be represented by the following Equation3.

$$Time\_system = UT\_current \quad \dots \dots (3)$$

At this time, in order to inform the user of the current local time, it is represented by calculating it as in the following Equation 4.

$$Time\_local\_current = Time\_system + LTZ\_current + DST\_current \quad \dots \dots (4)$$

A method of calculating the time of a time zone selected by a user with the system time of a currently set terminal as a reference is now discussed.

First, in the case where the system time of the terminal is set to the local time of a currently located time zone by a user or through the NITZ function, time information may be calculated using the following Equation 5.

$$Time\_local\_target = Time\_system - LTZ\_current + DST\_current) + LTZ\_target + DST\_target \quad \dots \dots (5)$$

In Equation 5, 'Time_local_target', 'LTZ_target' and 'DST_target' respectively denote the local time of a time zone to be obtained.

Further, in the case where the system time of the terminal is set to the current UT, current information may be calculated using the following Equation 6.

$$\text{Time\_local\_target=Time\_system+LTZ\_target+DST\_target} \quad\quad (6)$$

Meanwhile, in the case where the time information within the terminal is changed with the local time of the current time zone as a reference at step 306, the time information is changed as time information calculated using Equations 5 and 6.

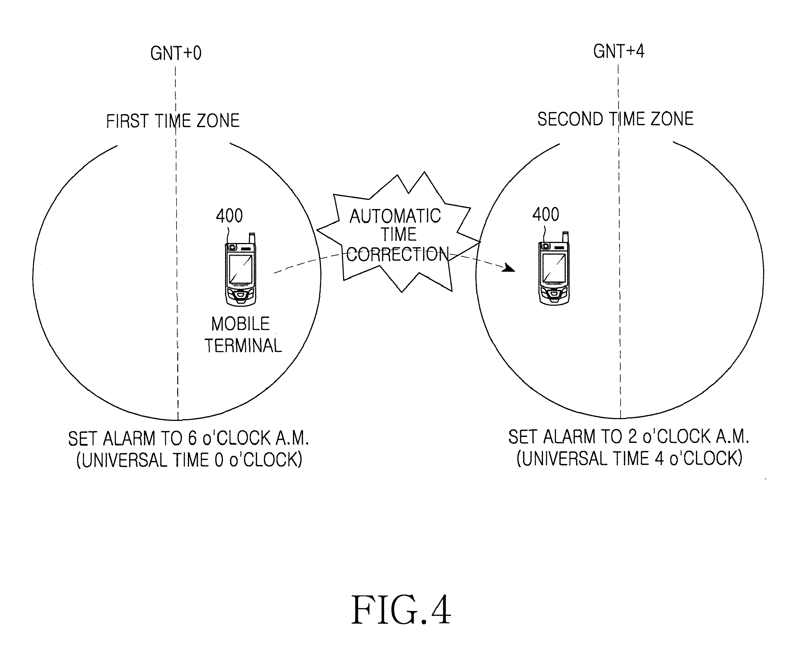

Step 306 is described in detail with reference to FIG. 4. It shows an example of automatically correcting time information in the case where a time zone is changed in the mobile communication terminal according to the first embodiment of the present invention.

Referring to FIG. 4, it is a case where a user of a mobile terminal 400 sets an alarm to 6:00 a.m. in a first time zone where the UT is 0:00 and then moves to a second time zone where the UT is 4:00.

At this time, the system time of the mobile terminal 400, having moved to the second time zone, is changed. First, a case where the system time is set to current local time by the user or through the NITZ function to which Equation 5 applies is discussed.

Here, 'Time_local_target', 'LTZ_target' and 'DST_target' are the local time and the time information of the first time zone. Thus, in the case where the user of the mobile terminal 400 having moved to the second time zone intends to receive an output alarm with the local time of the time zone before the movement, terminal 400 changes the alarm time information into time information calculated using Equation 7. 'Time_system' is time information of an application containing the time information, i.e., time information required to change with the local time of the time zone before the movement.

$$\text{Time\_local\_target}$$
$$= \text{Time\_system-(LTZ\_current+DST\_current)+LTZ\_target+DST\_target}$$
$$= 6:00 - 4:00 + 0:00$$
$$= 2:00 \quad\quad\quad (7)$$

Thus, the alarm time set to 6:00 in the first time zone may be changed and set to 2:00 in the second time zone at step 306 as calculated in the Equation 7. That is, although the user has changed the alarm time setting with the local time before the movement as a reference for the second time zone, the user may set the alarm to be generated in the case where the local time of the first time zone is 6:00.

Meanwhile, in the case where the system time of the mobile terminal 400 having moved to the second time zone is set to the current UT, time information may be calculated using the following Equation 8.

$$\text{Time\_local\_target} = \text{Time\_system + LTZ\_target + DST\_target}$$
$$= 6:00 + 4:00 = 10:00 \quad\quad\quad (8)$$

Thus, if the alarm time set to 6:00 in the first time zone is used in the second time zone as it is at step 308, the alarm is generated at a time point when the local time of the first time zone is 10:00 as calculated in Equation 8. At this time, 10:00 that is the local time of the first time zone is displayed together on a screen with the alarm in the second time zone.

Then, the process of managing time information between terminals located in different time zones using UT as a reference, according to a second embodiment of the present invention, is discussed with reference to FIG. 5.

If there is a request for sending a message containing time information at step 502, the sending terminal 500 inserts UT information in the message at step 503. Thereafter, the sending terminal 500 sends the message containing the UT information to the receiving terminal 510.

The receiving terminal 510 examines whether or not setting for automatically changing the time information contained in the received message with the local time of a transmitting side time zone as a reference is accomplished at step 504.

If so, the receiving terminal 510 proceeds to step 505. Otherwise, the receiving side terminal 510 proceeds to step 508 to perform a general message reception operation.

When the receiving terminal 510 proceeds to step 505, it examines whether or not it is necessary to identify the time information contained in the message sent from the sending terminal 500. That is, the receiving terminal 510 identifies the time information contained in the received message with the local time of the time zone of the sending terminal 510 as a reference. It examines the setting for identifying time information, which is calculated with the local time of the time zone of the receiving terminal 510 as reference. If setting for identifying time information with the two local times of the sending/receiving terminals as a reference is accomplished, the receiving terminal 510 proceeds to step 506 to calculate a corresponding time information using the UT information contained in the received message and to display the received time information and the calculated time information together as the content of a message.

Meanwhile, in the case where only the setting for automatically changing the time information contained in the received message with the local time of the current time zone as a reference is verified at step 505, the receiving terminal 510 proceeds to step 507 to calculate the time information contained the message with the local time information of the receiving terminal 510 as a reference using the UT information contained in the received message, and to insert the calculated time information in the appropriate part of the message in order to display it on a screen.

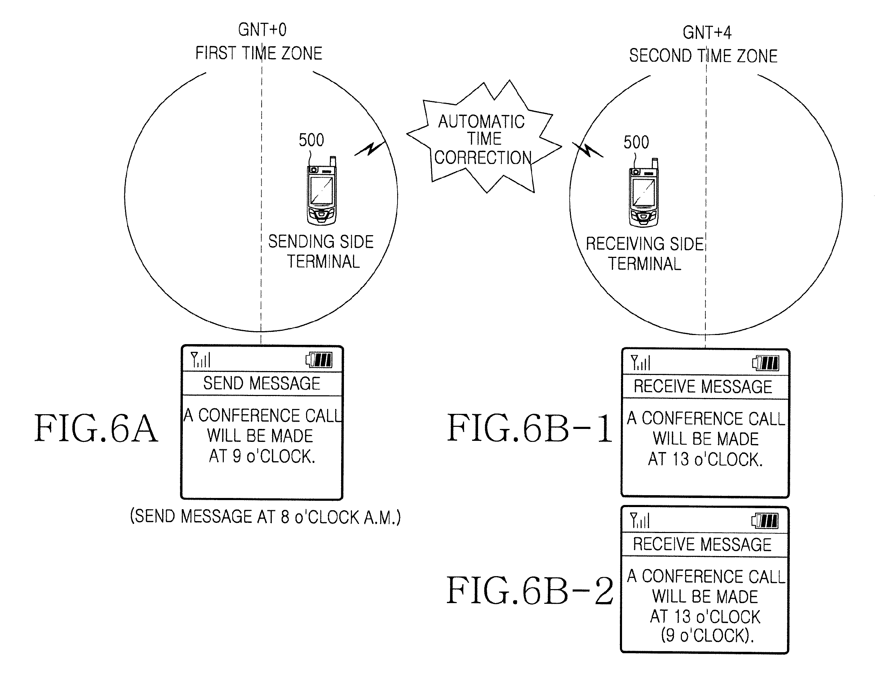

A description of calculating time is omitted because the method of calculating time with the local time information of a corresponding time zone as referenced in FIG. 5 is the same as that of calculating time using Equations 5 and 6, which have been described in reference to FIG. 3.The process outlined in FIG. 5 is described in detail with reference to FIG. 6. FIG. 6 shows an example of automatically correcting time when sending/receiving a message containing time information between GSM communication terminals located in different time zones according to the second embodiment of the present invention.

Referring to FIG. 6, this is an example of a case where the sending terminal 500 located in a first time zone where UT is 0:00 sends a message: "A conference call will be made at 9:00" shown in Fig. 6A the receiving terminal 510 located in the second time zone where UT is 4:00.

In the case where setting for automatically changing the time information contained in the received message with the local time of the sending side time zone as a reference is verified in step 504 in FIG. 5, the receiving terminal 510 displays a screen shown in FIG. 6B-1. That is, the receiving terminal 510 calculates 9:00 as the local time of the first time zone, from time information in the content of the received message, as the same as 13:00, which is the local time of the second time zone, i.e., sharable time using Equation 5, and displays 13:00, which is the calculated time, instead of 9:00, which is the time information in the content of the received message.

Further, the receiving terminal 510 displays a screen shown in Fig. 6B-2 at step 506 to which it proceeds because the setting for automatically changing the time information contained in the received message with the local time of the sending side time zone as a reference is verified at step 504 and the setting for identifying the time information with the two local time of the sending/receiving terminals as a reference is accomplished. That is, the receiving terminal 510 displays 13:00, which is the time information calculated as shown in 6B-1 Fig. 6B-2, and 9:00, which is the local time of the first time zone together.

As described above, the present invention can easily set personal schedule management containing time information by selecting the local time of a desired time zone. Further, it is advantageous in that, in the case where it is necessary to share schedule of terminal users located in different time zones, the schedule is shared with UT as a reference so that the schedule can be shared at the same time.

While the invention has been shown and described with reference to certain preferred embodiments thereof, it will be understood by those skilled in the art that various changes and modifications may be made therein without departing from the scope of the invention as further defined by the appended claims.

**Claims**

1. A device for managing time information in a mobile communication terminal, comprising:

   an RF unit for receiving time information from a public land mobile network;
   a time information change unit for calculating the system time of the terminal with universal time as a reference; and
   a controller for changing the system time calculated through the time information change unit with the local time of the selected time zone as a reference.

2. The device of claim 1, wherein the time information received from the public land mobile network contains at least one information of universal time information, Local Time Zone, LTZ, information indicating how much a corresponding time zone is relatively offset by universal time and Daylight Saving Time, DST, information.

3. The device of claim 2, wherein the controller examines whether setting for changing time information within an application with the local time of a time zone before movement as a reference is accomplished, whether a time zone where the terminal is located is changed, and calculates the time information within the application using:

$$Time\_local\_target = Time\_system - (LTZ\_current + DST\_current) + LTZ\_target + DST\_target,$$

wherein 'Time_local_target', 'LTZ_target' and 'DST_target' denote the local time of a time zone to be obtained, LTZ and DST, respectively, 'Time_system' denotes the time information within the application, and 'LTZ_current' and 'DST_current' denote LTZ and DST of a current time zone, respectively.

4. The device of one of claims 1 to 3, wherein the controller changes the system time with the local time of a specific time zone as a reference using the received time information and said change is made available to an application.

5. A method for managing time information in a mobile communication terminal, comprising the steps of:

   receiving time information from public land mobile network;
   examining if setting for changing the time information into a current system time with the local time of a specific time zone as a reference is accomplished; and
   calculating a system time with universal time of a selected time zone as a reference to change time within an application in which the time is contained.

6. The method of claim 5, wherein the time information received from the public land mobile network contains at least one or more information of universal time information, LTZ information and DST information.

7. The method of claim 5 or 6, further comprising:

   examining whether a setting for changing time information within an application with the local time of a time zone before the movement as a reference is accomplished, if a time zone where the terminal is located is changed; and
   calculating the time information within the application using:

$$Time\_local\_target = Time\_system - (LTZ\_current + DST\_current) + LTZ\_target + DST\_target,$$

where 'Time_local_target', 'LTZ_target' and 'DST_target' denote the local time of a time zone to be obtained, LTZ and DST, respectively, 'Time_system' denotes the time information within the application, and 'LTZ_current' and 'DST_current' denote LTZ and DST of a current time zone, respectively.

8. A method for managing time information for schedule sharing between sending and receiving terminals, comprising the steps of:

   containing universal time information to send when the sending terminal sends a message in which time information is contained to the receiving terminal;
   examining whether the time information contained in the message is automatically changed and set to the local time of the sending time zone as a reference;
   calculating the time contained in the message with the local time of the sending time zone as a reference if the time information is automatically changed and set to the local time of the sending time zone; and
   displaying the calculated time.

9. The method of claim 8, further comprising:

   (a) examining whether a displaying time setting to be automatically changed together with time contained in the message sent from the sending terminal is accomplished;
   (b) examining whether the time information is automatically changed and set with the local time of the sending time zone as a reference; and

(c) examining whether the displaying time contained in the content of the message sent from the sending terminal together with time in which the time contained in the content of the message is calculated.

EP 1 818 739 A2

GNT+0

FIRST TIME ZONE

100

MOBILE
TERMINAL

GNT+4

SECOND TIME ZONE

100

SET ALARM TO 6 o'CLOCK A.M.
(UNIVERSAL TIME 0 o'CLOCK)

SET ALARM TO 6 o'CLOCK A.M.
(UNIVERSAL TIME 4 o'CLOCK)

OUTPUT ALARM AT 6 o'CLOCK A.M.

OUTPUT ALARM AT 6 o'CLOCK A.M.WITH LOCAL TIME OF
SECOND TIME ZONE AS REFERENCE,
(OUTPUT ALARM AT 10 o'CLOCK A.M. WITH LOCAL TIME OF
FIRST TIME ZONE AS REFERENCE)

FIG.1

ANT

| 202 | 204 | 200 | 214 |

RF UNIT ↔ BASEBAND PROCESSOR ↔ CONTROLLER → KEY INPUT

206 — MEMORY ↔ CONTROLLER ← DISPLAY 212

TIME INFORMATION CHANGE UNIT

210

FIG.2

```
                    ┌─────────┐
                    │  START  │
                    └────┬────┘
                         │ ◄──────────────────────────┐
           ┌─────────────▼─────────────┐              │
           │      STANDBY STATUS       │─ 300         │
           └─────────────┬─────────────┘              │
                         │                            │
                     302 │                            │
                  ◇──────▼──────◇    NO               │
                 ╱  IS TIME ZONE ╲──────────────────┘
                 ╲   CHANGED?    ╱
                  ◇──────┬──────◇
                         │ YES
                         │
              304   ◇────▼────◇
                   ╱  IS TIME  ╲
                  ╱ INFORMATION ╲   NO
                 ╱ OF TERMINAL   ╲─────────────────┐
                 ╲ AUTOMATICALLY  ╱                │
                  ╲CHANGED AND SET?╱               │
                   ◇────┬────◇                     │
                        │ YES                      │
   ┌────────────────────▼────────┐    ┌────────────▼──────────────┐
   │ CHANGE TIME INFORMATION WITH │    │   USE TIME INFORMATION OF  │
   │   TIME OF CURRENT TIME       │─306│ TIME ZONE BEFORE MOVEMENT  │─308
   │   ZONE AS REFERENCE          │    └────────────┬──────────────┘
   └────────────────┬─────────────┘                │
                    │ ◄─────────────────────────────┘
              ┌─────▼─────┐
              │    END    │
              └───────────┘
```

# FIG.3

FIG.4

```
┌──────────────────┐                          ┌──────────────────┐
│  SENDING SIDE    │─500                      │  RECEIVING SIDE  │─510
│   TERMINAL       │                          │    TERMINAL      │
└──────────────────┘                          └──────────────────┘
         │                                              │
         ▼                                              │
        ╱╲              502                             │
       ╱  ╲───┘                                         │
  NO  ╱ IS THERE ╲                                      │
 ┌───╱ REQUEST FOR SENDING MESSAGE ╲                    │
 │   ╲ CONTAINING TIME            ╱                     │
 │    ╲ INFORMATION?             ╱                      │
 │     ╲╱                                               │
 │      │YES                                            │
 │      ▼                                               │
 │  ┌──────────────────────────┐                        │
 │  │ CONTAIN UT INFORMATION IN│─503                    │
 │  │ MESSAGE INTENDED TO SEND │                        │
 │  └──────────────────────────┘                        │
 │          │        SEND MESSAGE                        │
 │          ├────────────────────────────────────────►  │
 │          │                                      ▼
 │          │                          ╱╲          504
 │          │                         ╱  ╲───┘
 │          │                  NO    ╱ IS TIME INFORMATION ╲
 │          │              ┌────────╱ CONTAINED IN MESSAGE  ╲
 │          │              │        ╲ AUTOMATICALLY CHANGED AND╱
 │          │              │         ╲ SET WITH LOCAL TIME OF ╱
 │          │              │          ╲ SENDING SIDE TIME    ╱
 │          │              │           ╲  ZONE?            ╱
 │          │              ▼            ╲╱
 │          │    ┌──────────────────┐    │YES
 │          │    │ GENERAL MESSAGE  │─508 ▼
 │          │    │RECEPTION OPERATION│   ╱╲        505
 │          │    └──────────────────┘  ╱  ╲───┘
 │          │          YES            ╱ IS IT    ╲
 │          │       ┌────────────────╱ NECESSARY TO IDENTIFY╲
 │          │       │                ╲ TIME CONTAINED IN MESSAGE SENT╱
 │          │       ▼                 ╲ FROM SENDING SIDE  ╱
 │          │  ┌──────────────────┐    ╲ TERMINAL?       ╱
 │          │  │   CALCULATE      │     ╲╱
 │          │  │ CORRESPONDENT TIME│      │ NO
 │          │  │ INFORMATION USING UT│    │
 │          │  │ INFORMATION CONTAINED│─506│
 │          │  │ IN RECEIVED MESSAGE AND│  │
 │          │  │ DISPLAY RECEIVED AND │    │
 │          │  │ CALCULATED TIME      │    │
 │          │  │ INFORMATION TOGETHER │    │
 │          │  └──────────────────┘        │
 │          │                              ▼
 │          │            ┌──────────────────────────────┐
 │          │            │  CALCULATE AND DISPLAY        │
 │          │            │ CORRESPONDENT TIME INFORMATION│─507
 │          │            │   USING UT INFORMATION        │
 │          │            │ CONTAINED IN RECEIVED MESSAGE │
 │          │            └──────────────────────────────┘
```

# FIG.5

GNT+0
FIRST TIME ZONE

500

SENDING SIDE
TERMINAL

AUTOMATIC
TIME
CORRECTION

GNT+4
SECOND TIME ZONE

500

RECEIVING SIDE
TERMINAL

FIG.6A

Y₁ll      ⊏▮▮▮

SEND MESSAGE

A CONFERENCE CALL
WILL BE MADE
AT 9 o'CLOCK.

(SEND MESSAGE AT 8 o'CLOCK A.M.)

FIG.6B-1

Y₁ll      ⊏▮▮▮

RECEIVE MESSAGE

A CONFERENCE CALL
WILL BE MADE
AT 13 o'CLOCK.

FIG.6B-2

Y₁ll      ⊏▮▮▮

RECEIVE MESSAGE

A CONFERENCE CALL
WILL BE MADE
AT 13 o'CLOCK
(9 o'CLOCK).